# EUROPEAN PATENT SPECIFICATION

(11) **EP 1 221 433 B1**
(45) Date of publication and mention of the grant of the patent: **09.03.2005**
(21) Application number: 00957047.4
(22) Date of filing: 08.09.2000
(51) Int. Cl.: C08G 77/58

(54) **ORGANOMETALLIC BRIDGED POLYMER FOR USE IN PREPARING CERAMIC COMPOSITE MATERIAL AND METHOD FOR PREPARING THE SAME**
ORGANOMETALLISCH VERBRÜCKTE POLYMERE ZUR VERWENDUNG BEI DER HERSTELLUNG VON KERAMISCHEN KOMPOSITMATERIALIEN UND VERFAHREN ZUR HERSTELLUNG DERSELBEN
POLYMERE ORGANOMETALLIQUE PONTE UTILISABLE DANS LA PREPARATION DE MATERIAU CERAMIQUE COMPOSITE ET PROCEDE DE PRODUCTION

(30) Priority: 13.09.1999 JP 25868899; 13.09.1999 JP 25868999
(43) Date of publication of application: 10.07.2002
(73) Proprietor: Japan Science and Technology Agency, Kawaguchi-shi, Saitama 332-0012 (JP)
(72) Inventor: KOHYAMA, Akira, Kyoto-shi, Kyoto-fu 612-8104 (JP); KATOH, Yutai, 1414, Fujinomori-Godoshukusha, Kyoto-shi, Kyoto-fu 612-0031 (JP); YAMAMURA, Takemi, Ube-shi, Yamaguchi-ken 755-0014 (JP); SATO, Mitsuhiko, Ube-shi, Yamaguchi-ken 755-0151 (JP); TANAKA, Yoshizumi, Ube-shi, Yamaguchi-ken 755-0058 (JP)
(74) Representative: Müller-Boré & Partner Patentanwälte
(86) International application number: PCT/JP2000/006145
(87) International publication number: WO 2001/019753

(56) References cited:
- EP-A- 0 367 497
- JP-A- 1 215 759
- JP-A- 56 151 732
- JP-A- 57 022 186
- JP-A- 58 213 026
- JP-A- 63 128 027
- US-A- 4 159 259
- US-A- 4 334 051
- US-A- 4 358 576
- US-A- 5 277 973

## Description

### TECHNICAL FIELD OF THE INVENTION

The present invention relates to a polymer cross-linked with an organic metal compound suitable for production of heat-resistant ceramic composite with less radio activation characteristic, and also relates to a method of manufacturing thereof.

### BACKGROUND OF THE INVENTION

New ceramics such as SiC and Si₃N₄ have been developed so far for use in an ultimate environment such as a nuclear reactor, an aircraft machine or a spacecraft machine. Such ceramics are also used as members exposed to severe operational conditions such as heat exchangers or mechanical seals.

Among the new ceramics, SiC is typically regarded as a fruitful material in broad fields including an aircraft machine, a spacecraft machine and a nuclear reactor, since SiC is not only excellent in heat- and wear-resistance but also hardly generates long-life time radionuclides under neutron irradiation conditions.

SiC is good of high-temperature properties due to its high melting point of 2600°C, but brittle itself. Embrittlement of SiC is canceled by combining SiC matrix with SiC fiber, as reported by A. Lacombe and C. Bonnet, 2nd Int. Aerospace Planes Conf.Proc.AIAA-90-5208(1990), C. W. Hollenberg et al., J. Nucl. Mat., 219, (1995) p.70-86.

SiC fiber/SiC composite has been manufactured, using an organosilicon polymer as a precursor for SiC fiber and SiC matrix. Before the organosilicon polymer is converted to an inorganic state, it is cross-linked with an organic metal compound. Cross-linking effectively suppresses crystallization at a high temperature during conversion of the organosilicon polymer to an inorganic amorphous state, and also promotes densification of crystalline structure during conversion of the organosilicon polymer to an inorganic crystalline state. However, most of conventional organic metal compounds unfavorably cause induced radiation in a radioactive environment. There is also the defect that excess C, which is a cracked residue after thermolysis of the organic metal compound, remains in the ceramic composite. The excess C worsens heat-resistance and high-temperature strength of the ceramic composite.

### SUMMARY OF THE INVENTION

The present invention aims at structural control of a cross-linked polymer by use of a low-active organic metal compound so as to reduce excess C. An object of the present invention is to provide a new cross-linked organometallic polymer suitable for production of SiC fiber/SiC composite excellent in low radiation property, heat-resistance and high-temperature strength.

The present invention proposes a new cross-linked organometallic polymer. The cross-linked polymer comprises a portion of an organosilicon polymer and a portion of a cross-linking. The portion of the organosilicon polymer is a main frame composed of -Si-CH₂- units and -Si-Si- units with a number ratio of -Si-CH₂- to -Si-Si- units in a range of from 20:1 to 1:20 so as to keep a number ratio of Si to C atoms in a range of from 2:1 to 1:2. At least one of H atom or a low alkyl, aryl, phenyl or silyl group is connected to a side-chain of Si atom. The portion of the cross-linking comprises an organosilicon polymer having at least a part of Si atoms connected directly or through O with at least one metal M selected from V, Be, Cr, Ga, Ge, Se and Fe. A number ratio of a total -Si-CH₂- and -Si-Si- units to total -M-Si- and -M-O-Si- units is controlled to a value in a range of from 2:1 to 500:1. Number average molecular weight of the cross-linked polymer is 500-100,000.

Metal M may be one or more of Mo, Dy, Gd, Tb, Nd, instead of V, Be, Cr, Ga, Ge, Se and Fe.

The cross-linked polymer is manufactured as follows: At first, an organosilicon polymer, which is of 500-100,000 in number average molecular weight, has a main frame composed of -Si-CH₂- and -Si-Si- units with a number ratio of -Si-CH₂- to -Si-Si- units in a range of from 20:1 to 1:20 so as to keep a number ratio of Si to C atoms in a range of from 2:1 to 1:2 and has a side-chain of Si atoms connected with at least one of H atom or a low alkyl, aryl, phenyl or silyl group, is provided. The organosilicon polymer is mixed with an organic metal compound defined by the formula (1) at such a ratio that a number ratio of total -Si-CH₂- and -Si-Si- units in the organosilicon polymer to total M-X and M-R² units is adjusted to a value in a range of from 10:1 to 200:1. The mixture is then thermally reacted in an inert gas atmosphere. At least a part of Si atoms in the organosilicon polymer is connected with metal atoms M in the organic metal compound.

MX₄ or MR¹ ₙR² ₍₄₋ₙ₎ (1)

wherein M is at least one metal selected from V, Be, Cr, Ga, Ge, Se, Fe, Mo, Dy, Gd, Tb, Nd and Er,
X is an acetyl-acetoxy group,
R¹ is a carbonyl, cyclopentadiene or acetyl-acetoxy group,
R² is a halogen atom, and
n is natural number of 1-3.

### PREFERRED EMBODIMENTS OF THE INVENTION

The cross-linked polymer proposed by the present invention has a number ratio of -Si-CH₂- to -Si-Si- units in its molecule controlled in a range of from 20:1 to 1:20, in order to improve heat-resistance of ceramic composite without contamination with impurities such as O and without occurrence of excess C. If the polymer excessively includes the -Si-Si- units beyond the specified ratio, its activity is too high. The higher activity induces unfavorable incorporation of O in the molecule, resulting in significant degradation of heat-resistance. Excessive inclusion of the -Si-CH₂- units beyond the specified ratio on the contrary means stabilization of the polymer but causes presence of excess C due to a big number ratio of C/Si. Presence of excess C worsens heat-resistance of ceramic composite, and also raises viscosity of the mixture which leads to troubles during handling the mixture.

Metal M of the organic metal compound for cross-linking polymerization may be one or more of V, Be, Cr, Ga, Ge, Se and Fe. One or more of Mo, Dy, Gd, Tb, Nd and Er may be used as the metal element M, instead.

Such metals as V, Be, Cr, Ga, Ge, Se and Fe, which scarcely produce harmful nuclides in a radioactive environment, are useful for preparation of acetylacetonate. The other metals such as Mo, Dy, Gd, Tb, Nd and Er, which are also useful for preparation of acetylacetonate, favorably accelerate densification of the cross-linked polymer during conversion to an inorganic state. Any of these metals M is suitable for preparation of the cross-linked polymer which is converted to ceramic composite, since it changes the polymer to a cross-linked state effective for heat-resistance and anti-radioactivation.

However, excessive incorporation of the metal M in the polymer exaggerates generation of cross-linked structure and raises viscosity of the polymer. Increase of viscosity retards impregnation of SiC fiber with the polymer, and worsens mechanical properties of obtained ceramic composite. If incorporation of the metal M in the polymer is insufficient on the contrary, densification does not progress enough to bestow ceramic composite with good heat-resistance and mechanical properties.

Accounting these effects of the metal M on properties of a polymer and ceramic composite, a number ratio of total -Si-CH₂- and -Si-Si- units to total -M-Si- and -M-O-Si- units shall be controlled in a range of from 2:1 to 500:1. A novel cross-linked organometallic polymer, which can be converted to dense ceramic composite good of anti radio-activation, is offered with good processability due to the specified number ratio.

### EXAMPLE 1

### Case No. 1 for production of a cross-linked organic polymer

After a mixture of anhydrous xylene (2.5 liter) with metallic Na (400g) was heated up to the boiling point of the xylene in a nitrogen gas stream, dimethyldichlorosilane (1 liter) was dropped to the mixture. The heated mixture was distilled as such 10 hrs. to generate precipitate. The precipitate was filtered, washed with methanol and then washed with water. As a result, white powdery polydimethylsilane (400g) was produced.

A clear transparent liquid with some viscosity was gathered in a distillation receiver by heat-treatment of the polydimethylsilane at 420°C in a nitrogen gas stream. The liquid was confirmed as an organosilicon polymer, which had number average molecular weight of 980 with three-dimensional random structure mainly composed of -Si-CH₂-, -Si-Si-, -Si-CH₃- and -Si-H₃- units, by VPO (vapor pressure osmometry )measuring process.

The organosilicon polymer (30g) and Cr(III) acetylacetonate (5g) were weighed and mixed together. The mixture was dispersed in xylene (300 ml) to prepare a mixed liquid with homogeneous phase. The mixed liquid was reactively distilled by heating and stirring it one hour at 130°C in a nitrogen atmosphere. After completion of distillation, the xylene solvent was extracted. The residue was further polymerized 4 hrs. at 300°C to produce a cross-linked organometallic polymer containing Si and Cr.

The synthesized cross-linked polymer had number average molecular weight of 600. Results of infrared spectroscopy, mass spectrometry, and 1H-NMR and ²⁹Si-NMR spectrum analysis proved that the cross-linked polymer was composed of -Si-CH₂-, -Si-Si-, -Si-Cr- and -Cr-O-Si- units with a number ratio of about 20:2:1:1, respectively. A number ratio of C/Si in the cross-linked polymer was about 0.7.

### Case No. 2 for production of a cross-linked organic polymer

After a mixture of anhydrous tetrahydrofuran (800 ml) with metallic K (105 g) was heated up to 70°C in a nitrogen gas stream, a mixture of ClSi(CH₃)CH₂Cl (10g), (C₆H₅)HSiCl₂ (75g) and (CH₃)₂SiCl₂ (90g) was dropped to the heated mixture. The mixture was distilled as such 8 hrs. to produce precipitate. The precipitate was filtered, and then the anhydrous tetrahydrofuran was removed from the filtrate. A product obtained in this way was white slurry (32 g), which was confirmed as an organosilicon polymer of about 600 in number average molecular weight.

The organosilicon polymer (30g) and Ga(III) acetylacetonate (14g) were weighed and mixed together. A mixed liquid with homogeneous phase was prepared by dispersing the mixture in xylene (500 ml). The mixed liquid was reactively distilled one hour at 130°C in a nitrogen atmosphere. After completion of distillation, the xylene solvent was extracted, and the residue was further polymerized 4 hrs. at 300°C to produce a cross-linked organometallic polymer containing Si and Ga.

The synthesized cross-linked polymer was of about 2800 in number average molecular weight and composed of -Si-CH₂-, -Si-Si-, -Ga-Si- and -Ga-O-Si- units with a number ratio of about 50:4:3:2, respectively. A number ratio of C/Si in the cross-linked polymer was about 1.1.

### Production of SiC fiber/SiC composite

Each cross-linked polymer prepared in Cases No. 1 and 2 was dispersed in xylene at a ratio of 50 mass %. Three-dimensional cloth (of 120 mm in width, 240 mm in length and 5 mm in thickness with a fiber ratio of 1:1:0.2 along directions X, Y and Z, respectively) of Si-Zr-C-O fiber (Tyrranofiber ZMI-S5 offered by Ube Industries Ltd.) coated with carbon was impregnated with the xylene dispersion, vacuum dried and then baked under the condition that the impregnated cloth was heated up to 1300°C at 100°C/hr in an Ar gas stream, held one hour at 1300°C and then cooled to a room temperature in an oven.

Ceramic composite produced in this way had tensile strength 550 MPa at a room temperature and 540 MPa at 1400°C in the open air environment. The strength value at the high temperature proves that the ceramic composite was excellent in heat-resistance.

### Example 2

### Case No. 1 for production of a cross-linked organic polymer

After a mixture of anhydrous xylene (2.5 liter) with metallic Na (400g) was heated up to the boiling temperature of xylene in a nitrogen gas stream, dimethyldichlorosilane (1 liter) was dropped to the mixture. The heated mixture was distilled as such 10 hrs. to generate precipitate. The precipitate was filtered, washed with methanol and then washed with water. As a result, white powdery polydimethylsilane (400g) was produced.

A clear transparent liquid with some viscosity was gathered in a distillation receiver by heat-treatment of the polydimethylsilane at 420°C in a nitrogen gas stream. The liquid was confirmed as an organosilicon polymer, which had number average molecular weight of 980 with three-dimensional random structure mainly composed of -Si-CH₂-, -Si-Si-, -Si-CH₃- and -Si-H- units, by VPO measuring process.

The organosilicon polymer (30 g) and Dy(III) acetylacetonate (9 g) were weighed and mixed together. The mixture was dispersed in xylene (300 ml) to prepare a mixed liquid with homogeneous phase. The mixed liquid was reactively distilled by heating and stirring it one hour at 130°C in a nitrogen atmosphere. After completion of distillation, the xylene solvent was extracted. The residue was further polymerized 4 hrs. at 300°C to produce a cross-linked organometallic polymer containing Si and Dy.

The synthesized cross-linked polymer had number average molecular weight of about 1400. Results of infrared spectroscopy, mass spectrometry, and 1H-NMR and ²⁹Si-NMR spectrum analysis proved that the cross-linked polymer was composed of -Si-CH₂-, -Si-Si-, -Si-Dy- and -Dy-O-Si- units with a number ratio of about 20:2:1:1, respectively. A number ratio of C/Si in the cross-linked polymer was about 0.6.

### Case No. 2 for production of a cross-linked organic polymer

After a mixture of anhydrous tetrahydrofuran (800 ml) with metallic K (105 g) was heated up to 70°C in a nitrogen gas stream, a mixture of ClSi(CH₃)CH₂Cl (10g), (C₆H₅)HSiCl₂ (75g) and (CH₃)₂SiCl₂ (90g) was dropped to the heated mixture. The mixture was thermally distilled as such 8 hrs. to produce precipitate. The precipitate was filtered, and then the anhydrous tetrahydrofuran was removed from the filtrate. A product produced in this way was white slurry (32 g), which was confirmed as an organosilicon polymer of about 600 in number average molecular weight.

The organosilicon polymer (30g) and Gd(III) acetylacetonate (24g) were weighed and mixed together. A mixed liquid with homogeneous phase was prepared by dispersing the mixture in xylene (500 ml). The mixed liquid was reactively distilled one hour at 130°C in a nitrogen atmosphere. After completion of distillation, the xylene solvent was extracted, and the residue was further polymerized 4 hrs. at 300°C to produce a cross-linked organometallic polymer containing Si and Gd.

The synthesized cross-linked polymer was of about 2800 in number average molecular weight and composed of -Si-CH₂-, -Si-Si-, -Gd-Si- and -Gd-O-Si- units with a number ratio of about 50:4:3:2, respectively. A number ratio of C/Si in the cross-linked polymer was about 1.2.

### Production of SiC fiber/SiC composite

Each cross-linked polymer prepared in Cases No. 1 and 2 was dispersed in xylene at a ratio of 50 mass %. The same three-dimensional cloth as in Example 1 coated with carbon was impregnated with the xylene dispersion, vacuum dried and then baked under the condition that the impregnated cloth was heated up to 1300°C at 100°C/hr in an Ar gas stream, held one hour at 1300°C and then cooled to a room temperature in an oven.

Ceramic composite produced in this way was of sufficiently densified structure with closed porosity of 8 vol. % as a value by Archimedes method. The ceramic composite had tensile strength 550 MPa at a room temperature and 540 MPa at 1400°C in the open air environment. The strength value at the high temperature proves that the ceramic composite was excellent in heat-resistance.

### Comparative Case No. 1

After a mixture of anhydrous xylene (2.5 liter) with metallic Na (400g) was heated up to the boiling point of xylene in a nitrogen gas stream, dimethyldichlorosilane (1 liter) was dropped to the mixture. The heated mixture was distilled as such 10 hrs. to generate precipitate. The precipitate was filtered, washed with methanol and then washed with water. As a result, white powdery polydimethylsilane (400g) was produced.

A clear transparent liquid with some viscosity was gathered in a distillation receiver by heat-treatment of the polydimethylsilane at 420°C in a nitrogen gas stream. The liquid was confirmed as an organosilicon polymer, which had number average molecular weight of 980 with three-dimensional random structure mainly composed of -Si-CH₂-, -Si-Si-, -Si-CH₃- and -Si-CH₃- units.

### Comparative Case No. 2

The same organosilicon polymer (30 g) as in Comparative Case No. 1 and Ti(IV) acetylacetonate (5 g) were weighed and mixed together. The mixture was dispersed in xylene (300 ml) to prepare a mixed liquid with homogeneous phase. The mixed liquid was reactively distilled by heating and stirring it one hour at 130°C in a nitrogen atmosphere. After completion of distillation, the xylene solvent was extracted. The residue was further polymerized 4 hrs. at 300°C to produce a cross-linked organometallic polymer containing Si and Ti.

### Example 3

The same organosilicon polymer (30 g) as in Comparative Case No. 1 and V(IV) acetylacetonate (5 g) were weighed and mixed together. The mixture was dispersed in xylene (300 ml) to prepare a mixed liquid with homogeneous phase. The mixed liquid was reactively distilled by heating and stirring it one hour at 130°C in a nitrogen atmosphere. After completion of distillation, the xylene solvent was extracted. The residue was further polymerized 4 hrs. at 300°C to produce a cross-linked organometallic polymer containing Si and V.

The synthesized cross-linked polymer had number average molecular weight of 600 with a number ratio of V/Si of about 0.03 as a value of ICP (inductively coupled plasma) analysis.

### Example 4

The same organosilicon polymer (30 g) as in Comparative Case No. 1 and Nd(III) tris-cyclopentadienyl (6 g) were weighed and mixed together. The mixture was dispersed in xylene (300 ml) to prepare a mixed liquid with homogeneous phase. The mixed liquid was reactively distilled by heating and stirring it one hour at 130°C in a nitrogen atmosphere. After completion of distillation, the xylene solvent was extracted. The residue was further polymerized 4 hrs. at 300°C to produce a cross-linked organometallic polymer containing Si and Nd.

The synthesized cross-linked polymer had number average molecular weight of 600 with a number ratio of Nd/Si of about 0.03 as a value of ICP analysis.

### Production of SiC fiber/SiC composite

The cross-linked polymer prepared in each of **Comparative Cases 1**, **2 and Inventive Examples 3, 4** was dispersed in xylene at a ratio of 50 mass %. The same three-dimensional cloth as in **Example 1** coated with carbon was impregnated with the xylene dispersion, vacuum dried and then baked under the condition that the impregnated cloth was heated up to 1300°C at 100°C/hr in an Ar gas stream, held one hour at 1300°C and then cooled to a room temperature in an oven.

The produced ceramic composite was tested to detect its density and tensile strength at 1400°C in the open air. Intensity of γ-ray was also measured one week after from irradiation with neutron beam of 1 × 10²⁵n/m² (E>0.1 MeV). Test results are shown in Table 1.

**TABLE 1 :**

| Properties Of SiC Fiber/SiC Composites | | | | |
|---|---|---|---|---|
| Note | | porosity (%) | tensile strength (MPa) | intensity of γ-ray one week after irradiation (Sv·h⁻¹·g⁻¹) |
| Comparative Examples | No. 1 | 15 | 390 | 1 × 10⁻⁸ |
| | No. 2 | 13 | 440 | 3 × 10⁻⁶ |
| Inventive Examples | No. 3 | 9 | 540 | 3 × 10⁻⁸ |
| | No. 4 | 7 | 550 | 2 × 10⁻⁸ |

According to the present invention as above-mentioned, an organic cross-linked polymer is produced by cross-linking polymerization of an organosilicon polymer with such a metal as V, Be, Ge, Se, Fe, Mo, Tb, Nd and Er. The organic cross-linked polymer is baked to inorganic ceramic remarkably improved in high-temperature strength, since excess **C** does not remain in a baked state due to its specified molecular structure. The produced ceramic composite is stable with less influence of radio-activation caused by neutron-irradiation. Consequently, the ceramic composite is good of mechanical properties and heat-resistance with high density, so that it is applicable to members or parts in broad fields such as an aircraft machine, a spacecraft machine and a nuclear reactor.

## Claims

1. A cross-linked organometallic polymer useful for production of ceramic composite, which comprises:
a portion of an organosilicon polymer composed of -Si-CH₂- and -Si-Si- units with a number ratio of total -Si-CH₂- units to total -Si-Si- units in a range of from 20:1 to 1:20 so as to keep a number ratio of Si/C in a range of from 2:1 to 1:2, side-chains of Si atoms being coupled with at least one of H and low alkyl, aryl, phenyl and silyl groups; and
a portion of a cross-linking, wherein at least a part of Si atoms in said organosilicon polymer is connected directly or through O with at least one metal M selected from Mo, Dy, Gd, Tb, Nd, Er, V, Be, Cr, Ga, Ge, Se and Fe, and
wherein a number ratio of total -Si-CH₂- and -Si-Si- units to total -M-Si- and -M-O-Si- units is controlled in a range of from 2:1 to 500:1, and number average molecular weight is 500-100,000.

2. A cross-linked organometallic polymer useful for production of ceramic composite, which comprises:
a portion of an organosilicon polymer composed of -Si-CH₂- and -Si-Si- units with a number ratio of total -Si-CH₂- units to total -Si-Si- units in a range of from 20:1 to 1:20 so as to keep a number ratio of Si/C in a range of from 2:1 to 1:2, side-chains of Si atoms being coupled with at least one of H and low alkyl, aryl, phenyl and silyl groups; and
a portion of a cross-linking, wherein at least a part of Si atoms in said organosilicon polymer is connected directly or through O with at least one metal M selected from V, Be, Cr, Ga, Ge, Se and Fe, and
wherein a number ratio of total -Si-CH₂- and -Si-Si- units to total -M-Si- and -M-O-Si- units is controlled in a range of from 2:1 to 500:1, and number average molecular weight is 500-100,000.

3. A method of manufacturing a cross-linked organometallic polymer useful for production of ceramic composite, which comprises the steps of:
providing an organosilicon polymer, which is composed of -Si-CH₂- and -Si-Si- units with a number ratio of total -Si-CH₂- units to total -Si-Si- units in a range of from 20:1 to 1:20 so as to keep a number ratio of Si/C in a range of 2:1 to 1:2, side-chains of Si atoms in its molecule being coupled with at least one of H and low alkyl, aryl, phenyl and silyl groups;
mixing said organosilicon polymer with an organic metal compound defined by the formula (1) under the condition that a number ratio of total -Si-CH₂- and -Si-Si- units to total -M-X- and -M-R²- units is controlled in a range of from 10:1 to 200:1; and
heating the mixture in an inert gas atmosphere so as to react at least a part of Si atoms in said organosilicon polymer with the metal M in said organic metal compound.
MX₄ or MR¹ ₙR² ₍₄₋ₙ₎ (1)
wherein M is at least one metal selected from V, Be, Cr, Ga, Ge, Se, Fe, Mo, Dy, Gd, Tb, Nd and Er,
X is an acetyl-acetoxy group,
R¹ is a carbonyl, cyclopentadiene or acetyl-acetoxy group,
R² is a halogen atom, and
n is natural number of 1-3.

## Patentansprüche

1. Vernetztes organometallisches Polymer, verwendbar zur Herstellung von keramischem Verbundwerkstoff, umfassend:
einen Anteil eines siliciumorganischen Polymers, aufgebaut aus -Si-CH₂- und -Si-Si- Einheiten mit einem Zahlenverhältnis von allen -Si-CH₂- Einheiten zu allen -Si-Si- Einheiten in einem Bereich von 20:1 bis 1:20, so dass ein Zahlenverhältnis von Si/C in einem Bereich von 2:1 bis 1:2 gehalten wird, wobei Seitenketten von Si-Atomen mit mindestens einem von H und Niederalkyl-, Aryl-, Phenyl- und Silylgruppen gekuppelt sind; und
einen Anteil einer Vernetzung, in welcher mindestens ein Teil der Si-Atome in dem siliciumorganischen Polymer direkt oder über O mit mindestens einem Metall M, ausgewählt aus Mo, Dy, Gd, Tb, Nd, Er, V, Be, Cr, Ga, Ge, Se und Fe, verbunden ist, und
in welcher ein Zahlenverhältnis von allen -Si-CH₂- und -Si-Si- Einheiten zu allen -M-Si- und -M-O-Si- Einheiten in einem Bereich von 2:1 bis 500:1 kontrolliert ist und das Zahlenmittel des Molekulargewichts 500-100.000 beträgt.

2. Vernetztes organometallisches Polymer, verwendbar zur Herstellung von keramischem Verbundwerkstoff, umfassend:
einen Anteil eines siliciumorganischen Polymers, aufgebaut aus -Si-CH₂- und -Si-Si- Einheiten mit einem Zahlenverhältnis von allen -Si-CH₂- Einheiten zu allen -Si-Si- Einheiten in einem Bereich von 20:1 bis 1:20, so dass ein Zahlenverhältnis von Si/C in einem Bereich von 2:1 bis 1:2 gehalten wird, wobei Seitenketten von Si-Atomen mit mindestens einem von H und Niederalkyl-, Aryl-, Phenyl- und Silylgruppen gekuppelt sind; und
einen Anteil einer Vernetzung, in welcher mindestens ein Teil der Si-Atome in dem siliciumorganischen Polymer direkt oder über O mit mindestens einem Metall M, ausgewählt aus V, Be, Cr, Ga, Ge, Se und Fe, verbunden ist, und
in welcher ein Zahlenverhältnis von allen -Si-CH₂- und -Si-Si- Einheiten zu allen -M-Si- und -M-O-Si- Einheiten in einem Bereich von 2:1 bis 500:1 kontrolliert ist und das Zahlenmittel des Molekulargewichts 500-100.000 beträgt.

3. Verfahren zur Herstellung eines vemetzten organometallischen Polymers, verwendbar zur Herstellung von keramischem Verbundwerkstoff, welches die Schritte umfasst:
Bereitstellen eines siliciumorganischen Polymers, aufgebaut aus -Si-CH₂- und -Si-Si- Einheiten mit einem Zahlenverhältnis von allen -Si-CH₂- Einheiten zu allen -Si-Si- Einheiten in einem Bereich von 20:1 bis 1:20, so dass ein Zahlenverhältnis von Si/C in einem Bereich von 2:1 bis 1:2 gehalten wird, wobei Seitenketten von Si-Atomen in dessen Molekül mit mindestens einem von H und Niederalkyl-, Aryl-, Phenyl- und Silylgruppen gekuppelt sind;
Mischen des siliciumorganischen Polymers mit einer organischen Metallverbindung, definiert durch die Formel (1), unter der Bedingung, dass ein Zahlenverhältnis von allen -Si-CH₂- und -Si-Si- Einheiten zu allen -M-X- und -M-R²- Einheiten in einem Bereich von 10:1 bis 200:1 kontrolliert ist; und
Erwärmen des Gemisches in einer Inertgasatmosphäre, so dass mindestens ein Teil der Si-Atome in dem siliciumorganischen Polymer mit dem Metall M in der organischen Metallverbindung reagiert.
MX₄ oder MR¹ ₙR² ₍₄₋ₙ₎ (1)
worin M mindestens ein Metall, ausgewählt aus V, Be, Cr, Ga, Ge, Se,
Fe, Mo, Dy, Gd, Tb, Nd und Er, ist,
X eine Acetylacetoxygruppe ist,
R¹ eine Carbonyl-, Cyclopentadien- oder Acetylacetoxygruppe ist,
R² ein Halogenatom ist, und
n eine natürliche Zahl von 1-3 ist.

## Revendications

1. Polymère organométallique réticulé utile pour la production d'un composite céramique, qui comprend :
une partie d'un polymère organosilicium composé de motifs -Si-CH₂- et -Si-Si- avec un rapport en nombre des motifs -Si-CH₂- totaux sur les motifs -Si-Si- totaux dans une gamme de 20:1 à 1:20 de façon à maintenir un rapport en nombre de Si/C dans une gamme de 2:1 à 1:2, les chaînes latérales des atomes Si étant couplées à au moins l'un de H et des groupes alkyle inférieurs, aryle, phényle et silyle, et
une partie d'une réticulation, dans laquelle au moins une partie des atomes Si dans ledit polymère organosilicium est reliée directement ou par l'intermédiaire de O à au moins un métal M choisi parmi Mo, Dy, Gd, Tb, Nd, Er, V, Be, Cr, Ga, Ge, Se et Fe, et
dans lequel un rapport en nombre des motifs -Si-CH₂- et -Si-Si- totaux sur les motifs -Ni-Si et M-O-Si- totaux est régulé dans une gamme de 2 : 1 à 500 : 1, et la masse moléculaire moyenne en nombre est de 500 à 100 000.

2. Polymère organométallique réticulé utile pour la production d'un composite céramique, qui comprend :
une partie d'un polymère organosilicium composé de motifs -Si-CH₂- et -Si-Si- avec un rapport en nombre des motifs -Si-CH₂- totaux sur les motifs -Si-Si- totaux dans une gamme de 20:1 à 1:20 de façon à maintenir un rapport en nombre de Si/C dans une gamme de 2:1 à 1:2, les chaînes latérales des atomes Si étant couplées à au moins l'un de H et des groupes alkyle inférieurs, aryle, phényle et silyle ; et
une partie d'une réticulation, dans laquelle au moins une partie des atomes Si dans ledit polymère organosilicium est reliée directement ou par l'intermédiaire de O à au moins un métal M choisi parmi V, Be, Cr, Ga, Ge, Se et Fe, et
dans lequel un rapport en nombre des motifs -Si-CH₂- et -Si-Si- totaux sur les motifs -M-Si- et M-O-Si- totaux est régulé dans une gamme de 2:1 à 500:1, et la masse moléculaire moyenne en nombre est de 500 à 100 000.

3. Procédé de fabrication d'un polymère organométallique réticulé utile pour la production d'un composite céramique, qui comprend les étapes consistant à :
former un polymère organosilicium, qui est composé de motifs -Si-CH₂- et -Si-Si- avec un rapport en nombre des motifs -Si-CH₂- totaux sur les motifs -Si-Si totaux dans une gamme de 20:1 à 1:20 de façon à maintenir un rapport en nombre de Si/C dans une gamme de 2:1 à 1:2, les chaînes latérales des atomes Si dans sa molécule étant couplées à au moins l'un de H et des groupes alkyle inférieurs, aryle, phényle et silyle ;
mélanger ledit polymère organosilicium avec un composé organométallique défini par la formule (1) dans la condition qu'un rapport en nombre des motifs -Si-CH₂- et -Si-Si- totaux sur les motifs -M-X- et -M-R²- totaux est régulé dans une gamme de 10:1 à 200:1 ; et
chauffer le mélange dans une atmosphère de gaz inerte de façon à faire réagir au moins une partie des atomes Si dans ledit polymère organosilicium avec le métal M dans ledit composé organométallique.
MX₄ ou MR¹ ₙR² (4-n) (1)
dans laquelle M est au moins un métal choisi parmi V, Be, Cr, Ga, Ge, Se, Fe, Mo, Dy, Gd, Tb, Nd et Er,
X est un groupe acétylacétoxy,
R¹ est un groupe carbonyle, cyclopendadiène ou acétylacétoxy,
R² est un atome d'halogène, et
n est un nombre entier naturel de 1 à 3.
